# FASCICULE DE BREVET EUROPEEN

(11) **EP 1 923 119 B1**
(45) Date de publication et mention de la délivrance du brevet: **29.09.2010**
(21) Numéro de dépôt: 06447115.4
(22) Date de dépôt: 23.10.2006
(51) Int. Cl.: B01D 47/06, B01D 53/18, B05B 1/00

(54) **Méthode pour purifier un courant gazeux contenant des particules solides ou liquides.**
Methode um einem Gasstrom mit festen oder flüssigen Partikeln zu säubern
Method for the purification of a gas stream containing solid or liquid particles.

(43) Date de publication de la demande: 21.05.2008
(73) Titulaire: Verdroncken, Frans, 2520 Ranst (BE); Verdroncken, Eric, 1654 Huizingen (BE)
(72) Inventeur: Verdroncken, Frans, 2520 Ranst (BE); Verdroncken, Eric, 1654 Huizingen (BE)

(56) Documents cités:
- WO-A-98/50165
- US-A- 3 237 381
- US-A- 4 374 813
- US-A- 5 893 520
- US-A- 6 042 090

## Description

L'invention concerne une nouvelle méthode pour éliminer les particules nocives ou nauséabondes dans un courant gazeux, où ces particules sont transférées dans une phase liquide.

L'évacuation de certains courants gazeux produits en particulier par des activités industrielles implique des problèmes toujours croissants pour satisfaire aux réglementations très strictes imposées par les autorités dans les divers pays.

Les produits à éliminer peuvent se présenter dans le courant gazeux sous forme homogène ou hétérogène. Dans le dernier cas les produits à éliminer sont dans la phase liquide ou solide.

Pour éliminer les particules solides ou liquides du courant gazeux afin de permettre son évacuation dans l'atmosphère, des procédés ont été développés par un certain nombre de constructeurs. Ainsi on connaît des laveurs qui se composent d'une colonne à corps de remplissage, comparable à une colonne de distillation et arrosée par un liquide, généralement de l'eau ou une solution aqueuse. Parfois on utilise une colonne à plateaux. Dans un autre système les gaz sont purifiés par un jet aqueux. On emploie aussi des gicleurs ou des systèmes à venturi. Dans ce dernier cas les gaz passent à haute vitesse à travers une fente formée par un élément conique et y sont traités par un courant aqueux.

On connaît aussi les électrofiltres pour séparer les particules solides ou liquides à l'aide de l'électricité statique

Ces systèmes de séparation peuvent éliminer des particules de quelques microns, mais n'ont pas la possibilité d'éliminer les particules de dimensions plus petites qui se présentent comme un brouillard. Le brouillard contient dans la plupart des cas des particules solides et des aérosols d'acide chlorhydrique et d'acide sulfurique avec des dimensions de moins d'un micron. Tel est généralement le cas chez les incinérateurs de déchets industriels ou ménagers.

Pour atteindre les normes dans ces cas on utilise souvent des filtres ou le moyen filtrant est constitué de textile spécial. Avant le filtre on injecte parfois des produits adsorbants en poudre comme le charbon actif ou des réactifs chimiques comme la chaux. Ces produits sont également retenus sur le filtre et y forment une couche.

Un désavantage de ces filtres réside dans la nécessité que cette couche doit être enlevée lorsqu'elle présente une trop grande résistance au courant gazeux. Après l'écartement de cette couche, qui sert aussi comme moyen filtrant, le système a une efficacité filtrante moins grande pendant un certain temps. Cela peut avoir comme conséquence que les normes d'émission ne sont pas atteintes durant cette période.

Dans différents brevets on emploie des laveurs qui sont équipés de gicleurs qui divisent le liquide de lavage dans un brouillard de fines gouttelettes. Dans le brevet US 5.582.807( C.F.Liao et M.A. Siddoway) on utilise des gouttelettes avec un diamètre moyen de 20µm.

Les brevets DE 4228419 A1 et DE 3629688 A1 (Boguslawski et Zbigniew) mentionnent l'emploi de gouttelettes avec un diamètre de moins de 025µm. Dans le brevet DE 3307999 A1 (Peschanel F.D.) on traite un courant gazeux avec un brouillard ou les gouttelettes ont un diamètre moyen de 0,0001 à 0,05 mm. La méthode pour la formation du brouillard qui est appliquée dans le brevet est décrite dans le brevet US 3.894.691 (T.R.Mee), cependant ce brevet décrit la formation de gouttelettes avec des dimensions de 5 à 50µm. Dans le brevet US-A-4 374 813 (G. K. Chen, T. L. Holmes) on décrit un laveur à contre-courant équipé avec plusieurs gicleurs pour éliminer des contaminants gazeux, comme le SO2 ou des particules solides, dans un courant gazeux. Les gicleurs sont alimentés avec une pression du liquide de lavage de 60 à 350 psi ( environ 4 à 24 bar), produisant des gouttelettes de lavage de 0.5 à 2mm.

Il est apparu dans les exemples qui sont décrits plus loin que la dimension des gouttelettes n'est pas primordiale pour l'efficacité de la purification. Une plus grande importance doit être attribuée à la superficie du liquide de lavage exposée au gaz et au temps de contact avec ce liquide.

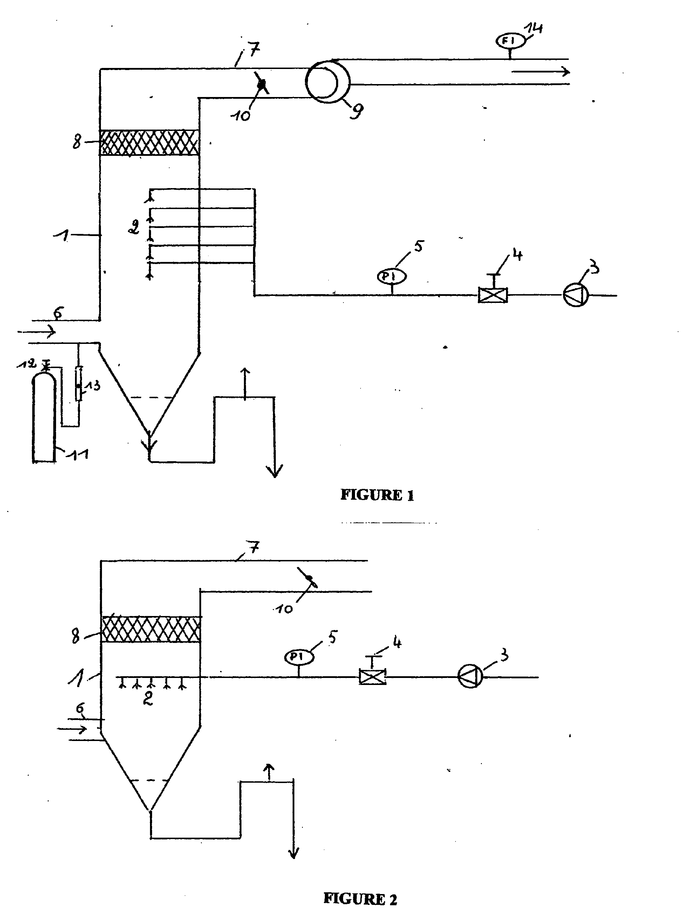

Selon l'invention, le système qui est présenté ici (figure 1) consiste dans la création d'un nuage de gouttelettes avec une très grande superficie.

Selon l'invention, le système qui est présenté ici (figure 1) consiste dans la création d'un nuage de gouttelettes avec une très grande superficie.

Un espace clos est pourvu de un ou de plusieurs gicleurs. L'espace clos comporte une entrée et une sortie pour les gaz et peut être construite par exemple en forme cylindrique.

Une pompe à haute pression est connectée aux gicleurs. La pression du liquide de lavage est graduellement augmentée. Le nombre de gouttelettes s'accroît en même temps, d'une part à cause du débit croissant, d'autre part à cause de la réduction de la dimension moyenne des gouttelettes sous l'influence de la pression avec laquelle le liquide est forcé à travers l'orifice des gicleurs. De ce fait la superficie totale des gouttelettes augmente.

En tenant compte du débit du liquide de lavage, du diamètre de l'orifice des gicleurs utilisés et de la pression nécessaire pour réaliser les résultats obtenus dans les exemples, on peut calculer que la concentration est de l'ordre de 10¹⁰ de gouttelettes par cm³ de gaz. Le diamètre moyen des gouttelettes correspondant à cette concentration est 0.00056mm. De ces données on peut déduire que, dans le cas des exemples, les gouttelettes ont une superficie spécifique d'environ 100 cm² par cm³ de gaz.

Il est important de souligner que la pression mentionnée de 50 à 55 bar vaut pour les conditions des essais, principalement en ce qui concerne le diamètre de l'orifice des gicleurs et la disposition géographique des gicleurs. Ainsi, en utilisant moins de gicleurs mais avec un orifice plus grand la pression à appliquer sera plus élevée pour obtenir le même degré de purification, le débit restant le même.

La superficie spécifique du liquide de lavage représente une valeur clef dans le système. Elle détermine le temps de séjour nécessaire dans le laveur pour réaliser la purification et de ce fait les dimensions du laveur.

Dans les exemples la zone de lavage a une hauteur de 1.8m. Le temps de séjour était 2,1 secondes. Il correspond à une vitesse des gaz dans la colonne de 1,2 m/s. En réduisant les distances entre les gicleurs la hauteur de la colonne peut être diminuée du fait que la concentration des gouttelettes augmente proportionnellement ce qui résulte dans le même résultat de purification.

Le choix du nombre de gicleurs et de la pression à appliquer doit se faire sur une base économique où jouent les frais d'investissement et de l'énergie. Sur cette base les diamètres des orifices applicables en pratique se situeront entre 0.5 mm et 20mm et les pressions dans les gicleurs entre 30bar et 2000bar.

En ce qui concerne la disposition des gicleurs, plus les gicleurs sont rapprochés, plus la concentration des gouttelettes augmente et de ce fait le temps de séjour diminuera. Les gicleurs peuvent être installés sur plusieurs plans comme indiqué sur la figure 1. Si le courant des gaz est plus important on peut installer plusieurs gicleurs au même plan Le nombre de plans peut varier ainsi que la distance entre les plans. Un meilleur rapprochement est atteint si on installe les gicleurs sur un seul plan (figure 2). La direction des jets sortant des gicleurs peut être dans le sens du courant gazeux ou en contre-courant.

Le liquide de lavage sera normalement de l'eau, éventuellement additionnée d'un produit chimique comme un acide ou une base, ou un oxydent ou réducteur ou autre. Des liquides organiques ou inorganiques sont également applicables comme liquide de lavage.

Le système pourra également éliminer des substances nocives ou nauséabondes en solution dans la phase gazeuse comme le SO₂, le NH₃, les amines, les mercaptans.

En dehors de la purification de fumées provenant de la combustion de matières d'origine domestique ou industrielle le système présenté convient également pour purifier les émissions d'autres activités. Ceci par exemple dans les centrales d'énergie, dans l'industrie du métal ou du bois, dans les scieries de pierres ou les cimenteries.

Une autre application se situe dans le domaine du conditionnement d'air lorsqu'il est nécessaire d'obtenir une qualité d'air extrême, par exemple dans la fabrication de circuits intégrés ("clean room") ou pour purifier de l'air contenant des microorganismes comme des bactéries ou des virus.

Les avantages par rapport à l'utilisation de filtres sont multiples:
- Le système suivant l'invention est parfaitement continu. Il ne présente pas d'interruption temporaire de l'efficacité de la purification ce qui est le cas pour les filtres quand ils doivent être nettoyés.
- L'utilisation du charbon actif peut être supprimée.
- L'efficacité de la purification peut être réglée suivant la nécessité par le nombre de gicleurs ou en modifiant la pression du liquide de lavage vers les gicleurs.
- Parfaite séparation de particules de moins d'un micron. Le degré de séparation en ce qui concerne les filtres est limité à la largeur de maille.
- Encombrement de l'installation réduite.
- Abaissement considérable des fiais d'investissement et d'entretien.

### Exemples

### 1° Exemple: (figure1)

Une colonne en verre (1) avec un diamètre de 0.3m et une hauteur de 2,5m est pourvue de cinq gicleurs (2) disposés dans l'axe de la colonne et distants chacun de 0.3m. Le diamètre de l'orifice des gicleurs mesure 1,1mm. Les gicleurs sont du type à cône creux avec un angle de pulvérisation de 85°. Ils sont connectés à une pompe haute pression (3) avec une capacité de 5001/h à une pression de 100bar. La pompe est alimentée par de l'eau du robinet. La pression peut être réglée et contrôlée avec une vanne (4) et un manomètre(5). Une entrée (6) pour les gaz est prévue dans la partie inférieure de la colonne et une sortie (7) dans la partie supérieure. La sortie est pourvue d'un dévésiculeur (8).

Un ventilateur (9) avec une capacité d'environ 400m³/h est installé à l'entrée des gaz. Le ventilateur aspire de l'air ambiant vers la colonne et le débit sur le débitmètre (14) est réglé avec une vanne (10) à 300Nm³/h. A ce courant on peut ajouter une quantité d'acide chlorhydrique gazeux provenant d'une bouteille sous pression (11) et réglable à un débit déterminé à l'aide d'une vanne (12) et d'un débitmètre (13).

La pompe (3) est mise en marche et la pression à l'entrée des gicleurs est réglée à environ 5 bar. La vanne de l'acide chlorhydrique (12) est ensuite ouverte et le courant est réglé sur un débit de 30g/h. Ainsi la concentration de l'acide chlorhydrique dans le mélange de gaz est de 100 mg/Nm3 à l'entrée de la colonne. Un brouillard dense se forme au contact de l'eau avec l'air contenant l'acide chlorhydrique par la formation d'un aérosol HCl/H2O. Ce brouillard passe à travers la colonne sur toute sa longueur sans que sa densité ne diminue à vue d'oeil. D'après analyse, à la sortie la concentration de l'acide chlorhydrique est de 96 mg/Nm3.

Ensuite la pression de l'eau dans les gicleurs est augmentée en ouvrant la vanne (4) graduellement. Lorsque la pression sur le manomètre indique 50 bar le brouillard à la sortie disparaît totalement Cette constatation indique clairement l'efficacité du système. D'après analyse la concentration d'acide chlorhydrique était de 5 mg/Nm3. En augmentant la pression d'eau jusqu'a 55 bar la concentration passe en dessous des limites de la méthode d'analyse employée qui est de 2mg/Nm³.

### 2° Exemple

La même colonne est connectée à la cheminée d'un incinérateur pour déchets industriels. Les fumées contiennent à l'entrée de la colonne 178 mg/Nm3 de matières solides et 130 mg/Nm3 d'acide chlorhydrique. La pression de la pompe était réglée à 55 bar. A la sortie les deux composants étaient en dessous des limites de la méthode d'analyse c'est à dire moins de 2mg/Nm³ pour l'acide chlorhydrique et moins de 5mg/Nm³ pour les matières solides

## Revendications

1. Méthode pour purifier un courant gazeux utilisant un espace clos pourvu d'une entrée et d'une sortie pour le courant gazeux et où sont installés un ou plusieurs gicleurs dont les orifices ont un diamètre de 0,5 mm à 20 mm, connectés à une pompe à haute pression, **caractérisé en ce que** la pompe alimente les gicleurs avec un liquide de lavage à une pression entre 50 et 2000 bar, créant une superficie des gouttelettes de liquide de lavage suffisamment élevée pour que les substances à éliminer sont captées par les gouttelettes et transférées dans le liquide de lavage.

2. Méthode selon la revendication 1 **caractérisé en ce que** les gicleurs sont du type à cône creux avec un diamètre de l'orifice de 1,1 mm.

3. Méthode selon les revendications 1 et 2 **caractérisé en ce que** la pression dans les gicleurs est réglée à 55 bar.

4. Méthode selon les revendications 1 à 3 **caractérisé en ce que** le liquide de lavage consiste dans de l'eau, éventuellement additionné de produits chimiques comme des alcalis, des acides ou des produits oxydants ou réducteurs.

5. Méthode selon les revendications de 1 à 3 **caractérisé en ce que** le liquide de lavage consiste dans un liquide ou une solution organique ou inorganique.

6. Méthode selon les revendications 1 à 5 pour éliminer des particules solides d'un courant gazeux.

7. Méthode selon les revendications 1 à 5 pour éliminer des particules liquides d'un courant gazeux.

8. Méthode selon les revendications 1 à 5 pour éliminer des micro-organismes d'un courant gazeux.

9. Méthode selon les revendications de 1 à 5 pour éliminer des substances en solution dans un courant gazeux.

## Claims

1. Method to purify a gas current using a closed space equipped with an entry and an exit for the gas current and with one or more jets inside whose openings have a diameter of 0.5 to 20 mm, connected to a high-pressure pump, **characterised in that** the pump feeds the jets with a washing liquid with a pressure between 50 and 2000 bar, creating a sufficient high surface of the washing liquid droplets so that the substances to be eliminated are collected by the droplets and are transferred in the washing liquid.

2. Method according to claim 1 **characterised in that** the jets are of the type with hollow cone with a diameter of the opening of 1.1 mm.

3. Method according to claims 1 and 2 **characterised in that** the pressure in the lets is regulated to 55 bar.

4. Method according to claims 1 to 3 **characterised in that** the washing liquid consists in water, possibly added with chemicals like alkalis, acids, or oxidising or reducing products.

5. Method according to claims 1 to 3 **characterised in that** the washing liquid consists in an organic or inorganic solution or liquid.

6. Method according to claims 1 to 5 to eliminate solid particles from a gas current.

7. Method according to claims 1 to 5 to eliminate liquid particles from a gas current

8. Method according to claims 1 to 5 to eliminate micro-organism from a gas current.

9. Method according to claims 1 to 5 to eliminate substances in solution from a gas current.

## Patentansprüche

1. Methode zum Reinigen eines Gasstroms, unter Verwendung eines geschlossenen Raumes, mit einem Eingang und einem Ausgang für den Gasstrom, in dem eine oder mehrere Düsen mit einem Durchmesser der Düsenöffnung von 0.5 mm bis 20 mm installiert sind, angeschlossen an eine Hochdruckpumpe, **dadurch gekennzeichnet dass** die Pumpe die Düsen mit einem Druck von 50 bis 2000 bar versorgt, wodurch eine Tropfenoberfläche der Waschflüssigkeit entsteht, welche ausreicht um die zu entfernenden Bestandteile auf zu fangen und in die Flüssigphase zu bringen.

2. Methode nach Anspruch 1 hierdurch **gekennzeichnet**, dass die Düsen in Form eines hohlen Kegels sind, mit einer Düsenöffnung von 1.1 mm.

3. Methode nach Ansprüche 1 und 2, **dadurch gekennzeichnet dass** der Druck in den Düsen auf 55 bar geregelt wird.

4. Methode nach Ansprüche 1 bis 3, **dadurch gekennzeichnet dass** die Waschflüssigkeit aus Wasser besteht, unter eventueller Zufügung chemischer Produkte, wie Laugen, Säuren, Oxydationsmittel oder Reduziermittel.

5. Methode nach den Ansprüche von 1 bis 3 **dadurch gekennzeichnet dass** die Waschflüssigkeit aus einer organischen oder anorganischen Lösung besteht.

6. Methode nach Ansprüche 1 bis 5 um feste Bestandteile aus einem Gasstrom zu entfernen.

7. Methode nach Ansprüche 1 bis 5 um flüssige Bestandteile aus einem Gasstrom zu entfernen.

8. Methode nach Ansprüche 1 bis 5 um mikroorganismen aus einem Gasstrom zu entfernen.

9. Methode nach Ansprüche 1 bis 5 um gelöste Stoffe aus einem Gasstrom zu entfernen.
